# EUROPEAN PATENT SPECIFICATION

(11) **EP 3 984 425 B1**
(45) Date of publication and mention of the grant of the patent: **06.09.2023**
(21) Application number: 20202458.4
(22) Date of filing: 19.10.2020
(51) Int. Cl.: A47J 42/50

(54) **COFFEE GRINDER**
KAFFEEMÜHLE
MOULIN À CAFÉ

(43) Date of publication of application: 20.04.2022
(73) Proprietor: BSH Hausgeräte GmbH, 81739 München (DE)
(72) Inventor: Schreiner, Thomas, 84431 Rattenkirchen (DE); Einsiedler, Thomas, 83278 Traunstein (DE); Henz, Manuel, 83410 Laufen (DE)

(56) References cited:
- EP-A1- 2 837 313
- WO-A1-01/23095
- WO-A1-2017/064083

## Description

The present invention relates to a coffee grinder, and more particularly, to a coffee grinder for an automatic coffee machine.

Conventional coffee grinders, including coffee grinders arranged in automatic coffee makers or fully automatic coffee makers, include a coffee bean container for storing coffee beans. Usually the coffee bean container has a receptacle with an output shaft placed onto the input of the grinding mill. The receptacle is open at the bottom. As a rule, the output shaft of the receptacle carries a guide cone, in order for the coffee beans to be supplied to the grinding mill. In automatic coffee makers with each request for coffee, freshly ground coffee is used for the preparation of coffee. A grinding mill associated with the automatic coffee maker is responsible for making available the particular required quantity of ground coffee. To brew the right quality coffee it is very important to have high quality coffee beans, without broken coffee beans, that would spoil taste of the coffee by introducing unwanted bitterness.

Document TWM551531 (U) discloses device for parchment removing and sorting of coffee cherry, that comprises: a roller body having a plurality of through-holes penetrating through the surface thereof, wherein the plurality of through-pearl holes are arranged at intervals and longitudinally and horizontally, and a feeding opening is recessed in the end surface of the roller body a shaft rod set having a shaft rotating rod laterally fixed to the feeding opening, wherein the shaft rotating rod is further provided with at least one fixing rod for longitudinally fixing the feeding opening, and another pivoting toothed plate is sleeved by the shaft a support body, which is provided with a base, each of which is provided with a bracket at each end, the two brackets are respectively provided with a shaft hole for attaching the shaft rotating rod; and a driving device having a driving toothed disc for The belt drives the pivoting sprocket, and the pivoting spur drives the shaft to rotate the drum body about the shaft.

Document DE2431994 (A1) discloses the coffee mill comprises a housing which is connected to the grinding unit and contains a cylindrical sieve whose mesh can be altered to meet the various requirements for different coffees. A regrinding unit is provided at the overflow from the sieve inside the housing with the output from the regrinding unit leading into a collecting funnel associated with the housing. When the coffee beans are fed into the mill the finer grounds pass into the area surrounding the conical sieve in the housing where they are collected up in the funnel. The larger grains which at first contain the non-pulverized coffee bean skins pass into the fixed cone at the end of the sieve where they are conveyed by a conical worm screw to the regrinding unit which comprises grinding discs.

Document JPH10191889 (A) discloses a sorter for crushed coffee beans, Crushed coffee beans mixed with defective parts are gradually dropped from a hopper and the defective parts, etc., are blown away by wind pressure P of windblown from a wind pass in a sorting area. The blown defective parts are sucked into a capture area by a blower (m) and captured by a filter fitted into the capture area. On the other hand, satisfactory parts are dropped without being blown away by the wind pressure P and housed in a vessel arranged in a satisfactory part accept area.

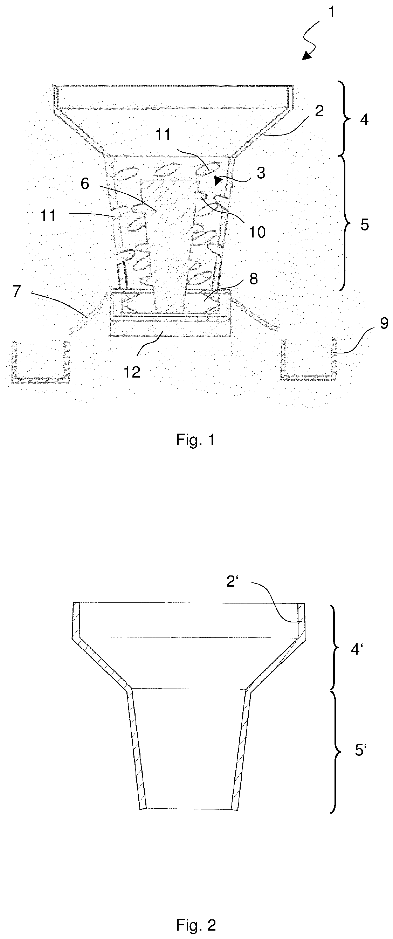

WO 01/23095 A1 is the prior art closest to the invention and discloses discloses a coffee grinder (10) with a grinding unit (14, 20) and a coffee bean container (12) with a dispensing opening (see figure 1) and divided into two portions (see figure 1).

Presented solutions do not provide efficient and compact device for removing broken coffee beans, that can be introduced into the small home appliance, for instance an automated coffee maker.

The objective of the present invention is to overcome problem associated with known solutions and to provide a coffee grinder, and more particular a coffee grinder for the automated coffee machine, wherein broken or substantially smaller than usually coffee beans are removed from the coffee grinder.

Another object of the invention is to provide a coffee grinder that can be easy rearranged by the user to work with or without removing broken or substantially smaller than usually coffee beans from the coffee grinder.

These objectives are solved by a coffee grinder with the features of appended claim 1, in particular containing a coffee bean container for a coffee grinder, that is divided to at least two portions, a container upper portion for storing coffee beans and a container lower portion which surrounds a conveyor shaft, and the container lower portion has sieving openings.

The automated coffee machine is a household apparatus designed for performing a brewing process. The automated coffee machine has many parts like a housing, a water tank, a brewing unit, a heater, a drip tray, a control process unit, usually equipped with a processor in order to control and oversee and automation the brewing process and the coffee grinder. The coffee grinder has a coffee bean container for storing coffee beans, that comprises a dispensing opening for beans, which during operation pass by way of the dispensing opening into the conveyor shaft with a conveyor screw, a grinding unit which is disposed underneath the conveyor shaft. During the process of preparing coffee, freshly grinded coffee beans are transported downstream from the grinder, to the brewing unit. Coffee beans are ground to allow the flavour to be extracted from the bean in water to provide a cup of coffee. During the brewing process, a portion of the hot water passes through the brewing unit with the coffee powder, in order to prepare a coffee. The machine provides the certain pressure, the water flow amount, the time duration and the temperature of the water stream. Typically, brewing machines have a body with the water tank for clear water, a pump which delivers water to the heating source and then to the brewing unit. The size and quality of grinded coffee beans have a significant meaning for the taste and aroma of the coffee. Broken or substantially smaller than usually coffee beans often are over-roasted, that cause that it can taste bitter or burnt, what can be undesirable effect for a demanding user, so for this purpose, namely for removing broken and/or significant smaller coffee beans before grinding coffee beans, the new coffee bean container is provided.

A coffee grinder according to the invention, that also includes coffee grinder mounted in the automated coffee machine, comprises a coffee bean container which has a dispensing opening for beans, which during operation pass by way of the dispensing opening into a conveyor shaft with a conveyor screw, a grinding unit which is disposed underneath the conveyor shaft, and the said coffee bean container is divided to at least two portions, the container upper portion for storing coffee beans and the container lower portion which surrounds the conveyor shaft, and the container lower portion has sieving openings for removing during passing through the coffee bean container, coffee beans, that are broken or substantially smaller than usually coffee beans. Broken or substantially smaller than usually coffee beans go outside of the coffee bean container through the said sieving openings.

It is to be understood that both the foregoing general description and the following detailed description are exemplary, and are intended to provide further explanation of the invention as claimed. Other advantages and features of the invention will be apparent from the following description, drawings and claims.

In the preferred embodiment of the invention the container lower portion has sieving openings that are regularly disposed around the conveyor shaft. Preferably each of the sieving openings have substantially the same size and the same shape. The positive effect is that broken or smaller coffee beans are removed from the coffee bean container evenly from the entire the container lower portion.

In the another preferred of the coffee grinder the container lower portion has sieving openings that are arranged in horizontal series, and the size of sieving openings of each series increases gradually in the direction from a top to a bottom portion of the container lower portion, therefore broken or smaller coffee beans are removed gradually, starting from the smallest particles.

In another variant of the invention the container lower portion is surrounded by a cover that completely covers the sieving openings. The cover can be movable connected to the coffee bean container. Alternatively, the coffee bean container is detachable mounted to a body of the coffee grinder, and the coffee bean container is replaceable by the coffee bean container that has no sieving openings. The positive effect is that the user can decide if the coffee beans should be sieved or not, before grinding.

In a favourable embodiment of the invention the coffee grinder has a chute that surrounds the lowest portion of the coffee bean container, and is sloped towards its discharge end, and the discharge end is connected to a waste container. So, coffee beans that are removed from the coffee bean container fall down and slide on the chute to the waste container.

Preferably the automated coffee machine includes a coffee grinder according to the present invention.

In the another preferable embodiment of the invention the automated coffee machine has the coffee bean container that is detachable mounted to the body of the coffee grinder or the body of the automated coffee machine. Preferably the coffee bean container is replaceable by the coffee bean container with the container lower portion that has no sieving openings.

The present invention provides a simple, cheap and compact solution of the coffee grinder also that can be included in the automated coffee machine, that comprises the coffee bean container with the container upper for storing coffee beans and lower portion, that is used for removing broken or to small coffee beans by using sieving openings that are implemented in the container lower portion. Additionally the said sieving openings can be covered by an implemented cover or the coffee been container can be replaced by the coffee bean container that has no sieving openings, so user can choose whether the said coffee beans should be sieved or not.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings.

Further benefits and advantages of the present invention will become apparent after a careful reading of the detailed description with appropriate reference to the accompanying drawings.

In the drawings:
- Fig. 1: shows a cross-section of a coffee grinder;
- Fig. 2: shows a cross-section of a variant of a coffee bean container;

Fig. 1 shows a cross-section of a coffee grinder 1 having a coffee bean container 2, that is divided to a container upper portion 4 for storing coffee beans, and a container lower portion 5. The container lower portion 5 is equipped with regularly disposed, and equal sieving openings 11 for sieving coffee beans. The coffee grinder 1 has a conveyor shaft 6 with a conveyor screw 10, that is surrounded by the container lower portion 5 for feeding a grinding unit 8, that is disposed underneath. Between the container lower portion 5 and the conveyor shaft 6 a dispensing opening 3 is arranged. During operation of the coffee grinder 1, coffee beans pass by way of the dispensing opening 3 into the conveyor shaft 6 with the conveyor screw 10, and are delivered to the grinding unit 8. Broken or substantially smaller than usually coffee beans go outside of the coffee bean container 2 through the sieving openings 11. The container lower portion 5 has a frusto-conical shape, and also the conveyor shaft 6 has a frusto-conical surface, that is sloped at the same angle as the container lower portion 5. Ground coffee beans, as a coffee powder go outside the coffee grinder 1 by a coffee powder discharge 12. The coffee grinder 1 has a chute 7 that surrounds the lowest portion of the coffee bean container 2, and is sloped towards its discharge end. Under the discharge end a waste container 9 is arranged, that is in the form of an annular gutter of a rectangular cross section. The coffee bean container 2 is detachable mounted to the coffee grinder 1.

Fig.2 shows a cross-section of a variant of a coffee bean container 2, namely a coffee bean container 2'. The coffee bean container 2', consists of a container upper portion 4' and a container lower portion 5'. The coffee bean container 2' has the same shape and size as the coffee bean container 2, but the container lower portion 4' has no sieving openings.

### List of reference signs

1 coffee grinder
2, 2' coffee bean container
3 dispensing opening
4, 4' container upper portion
5, 5' container lower portion
6 conveyor shaft
7 chute
8 grinding unit
9 waste container
10 conveyor screw
11 sieving opening
12 coffee powder discharge

## Claims

1. A coffee grinder (1) having a conveyor shaft (6) with a conveyor screw (10), a coffee bean container (2) which comprises a dispensing opening (3) for beans, which during operation pass by way of the dispensing opening (3) into said conveyor shaft (6) with said conveyor screw (10), a grinding unit (8) which is disposed underneath the conveyor shaft (6), wherein the coffee bean container (2) is divided into at least two portions, a container upper portion (4) for storing coffee beans and a container lower portion (5) which surrounds the conveyor shaft (6), wherein the container lower portion (5) has sieving openings (11).

2. A coffee grinder according to claim 1, **characterized in that** said sieving openings (11) are regularly disposed around the conveyor shaft (6).

3. A coffee grinder according to claim 1 or 2, **characterized in that** each of the sieving openings (11) have substantially the same size and the same shape.

4. A coffee grinder according to claim 1 or 2, **characterized in that** the container lower portion (5) has sieving openings (11) that are arranged in horizontal series, and **in that** the size of sieving openings (11) of each series increases gradually in the direction from a top to a bottom portion of the container lower portion (5).

5. A coffee grinder according to any preceding claim, **characterized in that** the container lower portion (5) is surrounded by a cover that completely covers the sieving openings (11).

6. A coffee grinder according to any preceding claim, **characterized in that** the coffee bean container (2) is detachably mounted to a body of the coffee grinder (1), and **in that** the coffee bean container (2) is replaceable by a coffee bean container (2') that has no sieving openings (11).

7. A coffee grinder according to any preceding claim, **characterized by** a chute (7) that surrounds the lowest portion of the coffee bean container (2), and that is sloped towards its discharge end, and the discharge end is connected to a waste container (9).

8. Automated coffee machine **characterized in that** it includes a coffee grinder according to any preceding claim.

9. Automated coffee machine according to claim 8 **characterized in that** the coffee bean container (2) is detachably mounted to a body of the coffee grinder (1).

10. Automated coffee machine according to claim 8 or 9, **characterized in that** the coffee bean container (2) is replaceable by a coffee bean container (2') with a container lower portion (5') that has no sieving openings (11).

## Patentansprüche

1. Kaffeemühle (1) mit einer Antriebswelle (6) mit einer Förderschnecke (10), einem Kaffeebohnenbehälter (2), der eine Dosieröffnung (3) für Bohnen umfasst, die im Betrieb über die Dosieröffnung (3) in die Antriebswelle (6) mit der Förderschnecke (10) geführt werden, einer Mahleinheit (8), die unterhalb der Antriebswelle (6) angeordnet ist, wobei der Kaffeebohnenbehälter (2) in mindestens zwei Abschnitte unterteilt ist, einen Behälteroberteil (4) zum Aufbewahren von Kaffeebohnen und einen Behälterunterteil (5), der die Antriebswelle (6) umgibt, wobei der Behälterunterteil (5) Sieböffnungen (11) aufweist.

2. Kaffeemühle nach Anspruch 1, **dadurch gekennzeichnet, dass** die Sieböffnungen (11) um die Antriebswelle (6) herum regelmäßig angeordnet sind.

3. Kaffeemühle nach Anspruch 1 oder 2, **dadurch gekennzeichnet, dass** jede der Sieböffnungen (11) im Wesentlichen die gleiche Größe und Form aufweist.

4. Kaffeemühle nach Anspruch 1 oder 2, **dadurch gekennzeichnet, dass** der Behälterunterteil (5) Sieböffnungen (11) aufweist, die in horizontalen Reihen angeordnet sind, und dass die Größe der Sieböffnungen (11) in jeder Reihe in Richtung von einem oberen zu einem unteren Abschnitt des Behälterunterteils (5) allmählich zunimmt.

5. Kaffeemühle nach einem der vorhergehenden Ansprüche, **dadurch gekennzeichnet, dass** der Behälterunterteil (5) von einer Abdeckung umgeben ist, die die Sieböffnungen (11) vollständig abdeckt.

6. Kaffeemühle nach einem der vorhergehenden Ansprüche, **dadurch gekennzeichnet, dass** der Kaffeebohnenbehälter (2) abnehmbar an einem Hauptteil der Kaffeemühle (1) angebracht und durch einen Kaffeebohnenbehälter (2') ersetzbar ist, der keine Sieböffnungen (11) aufweist.

7. Kaffeemühle nach einem der vorhergehenden Ansprüche, **gekennzeichnet durch** eine Rutsche (7), die den untersten Abschnitt des Kaffeebohnenbehälters (2) umgibt und zu ihrem Abgabeende hin geneigt ist, und wobei das Abgabeende mit einem Abfallbehälter (9) verbunden ist.

8. Kaffeeautomat, **dadurch gekennzeichnet, dass** er eine Kaffeemühle nach einem der vorhergehenden Ansprüche aufweist.

9. Kaffeeautomat nach Anspruch 8, **dadurch gekennzeichnet, dass** der Kaffeebohnenbehälter (2) abnehmbar an einem Hauptteil der Kaffeemühle (1) angebracht ist.

10. Kaffeeautomat nach Anspruch 8 oder 9, **dadurch gekennzeichnet, dass** der Kaffeebohnenbehälter (2) durch einen Kaffeebohnenbehälter (2') mit einem Behälterunterteil (5') ersetzbar ist, der keine Sieböffnungen (11) aufweist.

## Revendications

1. Moulin à café (1) possédant un arbre de convoyeur (6) avec une vis de convoyeur (10), un contenant à grains de café (2) qui comprend un orifice de distribution (3) pour les grains qui, durant le fonctionnement, passent via l'orifice de distribution (3) dans ledit arbre de convoyeur (6) avec ladite vis de convoyeur (10), une unité de broyage (8) disposée sous l'arbre de convoyeur (6), dans lequel le contenant à grains de café (2) est divisé en au moins deux parties, une partie supérieure de contenant (4) pour stocker les grains de café et une partie inférieure de contenant (5) qui entoure l'arbre de convoyeur (6), dans lequel la partie inférieure de contenant (5) possède des orifices de criblage (11).

2. Moulin à café selon la revendication 1, **caractérisé en ce que** lesdits orifices de criblage (11) sont disposés régulièrement autour de l'arbre de convoyeur (6).

3. Moulin à café selon la revendication 1 ou 2, **caractérisé en ce que** chacun des orifices de criblage (11) possède substantiellement la même taille et la même forme.

4. Moulin à café selon la revendication 1 ou 2, **caractérisé en ce que** la partie inférieure de contenant (5) possède des orifices de criblage (11) disposés en séries horizontales et **en ce que** la taille des orifices de criblage (11) de chaque série augmente graduellement d'une partie haute vers une partie basse de la partie inférieure de contenant (5).

5. Moulin à café selon l'une quelconque des revendications précédentes, **caractérisé en ce que** la partie inférieure de contenant (5) est entourée par un couvercle qui couvre intégralement les orifices de criblage (11).

6. Moulin à café selon l'une quelconque des revendications précédentes, **caractérisé en ce que** le contenant à grains de café (2) est monté de façon amovible sur un corps du moulin à café (1) et **en ce que** le contenant à grains de café (2) est remplaçable par un contenant à grains de café (2') sans orifices de criblage (11).

7. Moulin à café selon l'une quelconque des revendications précédentes, **caractérisé par** un toboggan (7) qui entoure la partie la plus inférieure du contenant à grains de café (2) et qui est incliné en direction de son extrémité d'évacuation et l'extrémité d'évacuation est reliée à un contenant à déchets (9).

8. Machine à café automatique **caractérisée en ce qu'**elle comprend un moulin à café selon l'une quelconque des revendications précédentes.

9. Machine à café automatique selon la revendication 8, **caractérisée en ce que** le contenant à grains de café (2) est monté de façon amovible sur un corps du moulin à café (1).

10. Machine à café automatique selon la revendication 8 ou 9, **caractérisée en ce que** le contenant à grains de café (2) est remplaçable par un contenant à grains de café (2') avec une partie inférieure de contenant (5') sans orifices de criblage (11).
